# EUROPEAN PATENT SPECIFICATION

(11) **EP 0 637 092 B1**
(45) Date of publication and mention of the grant of the patent: **12.03.1997**
(21) Application number: 94109532.5
(22) Date of filing: 21.06.1994
(51) Int. Cl.: H01M 10/04

(54) **Electrical battery**
Elektrische Batterie
Batterie électrique

(30) Priority: 13.07.1993 IT TO930520
(43) Date of publication of application: 01.02.1995
(73) Proprietor: SOCIETA' INDUSTRIALE ACCUMULATORI S.r.l., 24058 Romano di Lombardia (Bergamo) (IT)
(72) Inventor: Fossati, Giuseppe, I-24050 Mozzanica (Bergamo) (IT)
(74) Representative: Gerbino, Angelo

(56) References cited:
- EP-A- 0 107 976
- EP-A- 0 239 051
- WO-A-89/12329
- FR-A- 2 292 345
- GB-A- 2 158 285
- PATENT ABSTRACTS OF JAPAN vol. 6, no. 170 (E-128) 3 September 1982 & JP-A-57 087 081 (YUASA BATTERY CO LTD)
- PATENT ABSTRACTS OF JAPAN vol. 6, no. 173 (E-129) 7 September 1982 & JP-A-57 090 882 (SHIN KOBE ELECTRIC MACH CO)

## Description

The present invention relates to an electrical battery comprising a container which contains at least two cells disposed electrically in series and each including two electrodes, a positive one and a negative one, separated by a partition, each electrode being constituted by at least one grid of electrically conductive material adapted to support a positive or negative active paste.

In known batteries of the type mentioned above, the electrical connection of several cells in series is achieved by means of welded bridges of conductive material which connect together the electrodes of opposite polarity in adjacent cells.

This type of connection may be broken in various ways: for example, improper welding or corrosion thereof due to the generation of localised cells.

Such breaks in the electrical connections cause the battery to stop operating, and in some circumstances, more serious consequences such as its discharge.

In order to avoid these problems, in known batteries of the type indicated above at least one negative electrode and one positive electrode of two different cells are formed with the use of the same grid, different portions of which support the positive active paste and the negative active paste respectively.

Batteries of this latter kind are known from WO-A-89 12 329 and EP-A-0 107 976. The subject of the present invention is constituted by a battery having the features disclosed in claim 1, whereby the manufacture of grids is simplified.

In the batteries of the invention, the electrical connection between electrodes of opposite polarity in adjacent cells is achieved by virtue of the said grid of conductive material, different portions of which act as the negative electrode and the positive electrode respectively.

This electrical connection is thus intrinsically secure and may be considered in practice free from interruption during the working life of the battery.

The battery according to the invention has the further advantage of having a compact structure which does not require additional elements to ensure the interconnection of the various cells, with a simplification in the process for its production.

In one embodiment, which provides for the formation of the smallest configuration possible for the battery of the invention, this latter comprises first and second adjacent cells. The first and second cells include a first positive electrode and a first negative electrode respectively having terminals for connection to external circuits. A grid, which has two separate portions which support positive and negative active pastes respectively is superposed on the first positive and negative electrodes so that the portion which supports the positive active paste is opposite the first negative electrode, constituting the positive electrode of the second cell, and the portion which supports the negative active paste is opposite the first positive electrode, constituting the negative electrode of the first cell.

Further advantages and characteristics of the present invention will become apparent from the detailed description which follows, given with reference to the appended drawings, provided purely by way of non-limiting example, in which:
Figures 1 to 3 illustrate schematically successive steps in the method of assembly of a battery according to the invention, and
Figure 4 is an exploded perspective view of a further embodiment of a battery according to the invention.

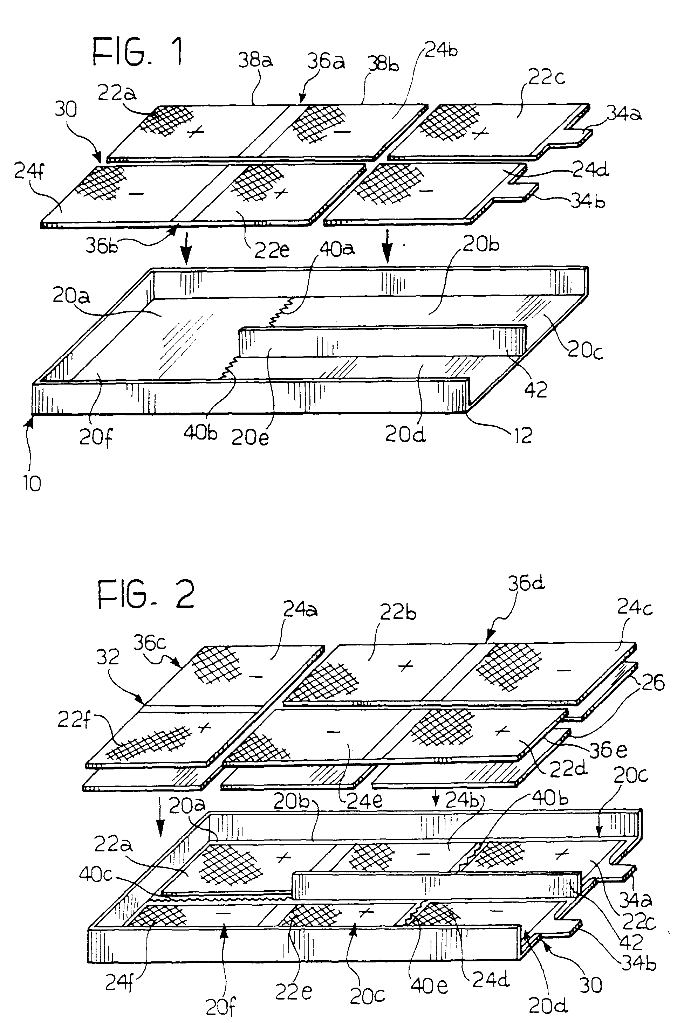

An electrical battery comprises (Figures 1 to 3) a container 10 formed by a box-shaped housing 12 without two faces which are closed by a cover 14 and a side element 16 respectively which latter supports a positive pole 18a and a negative pole 18b for enabling the battery to be connected to external circuits.

Within the container 10 are six cells 20a - 20f arranged in a matrix constituted by two rows and three columns.

Each cell 20 includes a positive electrode 22 located opposite a negative electrode 24, a partition 26 being located between them, and a free or immobilised electrolyte not visible in the drawings.

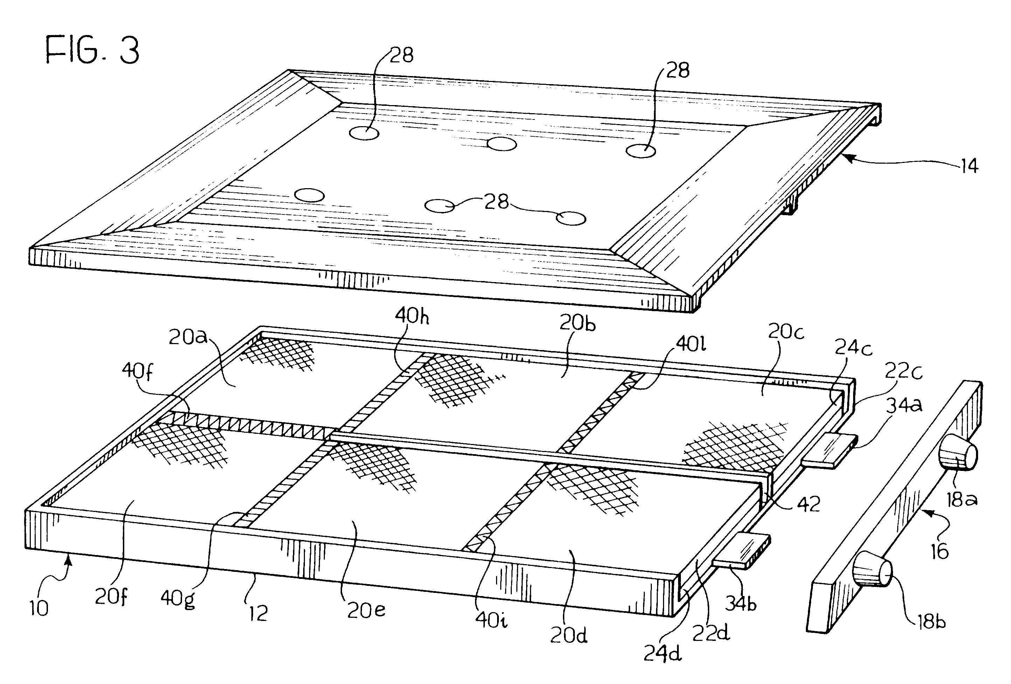

The cell may be filled with the electrolyte through apertures 28 (Figure 3) formed in the cover 14 in correspondence with each cell 20.

The electrodes 22, 24 of the cells 20 are arranged in first and second parallel planes 30, 32 respectively in such a manner that the electrodes 22, 24 of different polarity lie in a chequered array in each plane 30, 32.

The two cells 20c, 20d in the end column of the matrix alongside the side element 16 in the first plane 30 (Figures 1, 2) have a first positive electrode 22c and a first negative electrode 24d with terminals 34a, 34b for their connection to the poles 18 (Figure 3).

These electrodes 22c, 24d are formed in known manner by a grid structure, for example of lead alloy, which supports an active paste.

Still in the first plane 30, the two remaining pairs of cells 20a, 20b; 20e, 20f of each row of the matrix have respective grids 36a, 36b of conductive material, particularly lead alloy, similar to that used for the electrodes 22c, 24d.

Separate portions 38a, 38b of the grids 36 support a positive active paste and a negative active paste respectively constituting further positive electrodes 22a, 22e and negative electrodes 24b, 24f respectively.

In the second plane 32 (Figure 2), the pair of cells 20a, 20f of the end column opposite the end column containing the cells 20c, 20d with the first positive electrode 22c and negative electrode 24d and the two remaining pairs of cells 20b, 20c; 20d, 20e of each row of the matrix, include further respective grids 36c, 36d, 36e coated with active paste in a manner similar to those located in the first plane 30.

The various cells 20 are insulated from each other by means of respective beads 40 of insulating material, for example resin, disposed between the two portions 38 of each grid 36 and in the interstices between adjacent cells 20.

This insulation is also contributed to by a wall 42 which has the further function of stiffening the container 10 and which projects upwardly between the two rows of cells 20 in correspondence with the central column and the end column close to the side element 16.

The grids 36 act as electrical connection means between the two electrodes 22, 24 of opposite polarity formed on each grid 36 and thus connect the two different cells 20 to which the electrodes 22, 24 belong in series. As a result of the arrangement described above, the six cells 20 are thus connected in series with each other so that the overall voltage supplied by the battery is given by the sum of the voltages of the individual cells 20.

It is clear that it is possible to increase or reduce the voltage supplied by the battery by varying correspondingly the number of cells connected in series in arrangements similar to that described above.

The method of manufacture of the battery of the invention (Figure 1) includes the deposition of insulating beads 40a, 40b on the bottom of the container and then the positioning of the electrodes 22c, 24d and the grids 36a, 36b of the first plane 30, coated with the active material, on the beads in the first plane 30. Then (Figure 2) the insulating beads 40c, 40d, 40e are deposited and the partitions 26 are positioned on the electrodes 22, 24 of the first plane 30 and the grids 36c, 36d, 36e of the second plane 32, coated with active material, are positioned on the partitions 26.

Finally (Figure 3) the insulating beads 40f, 40g, 40h, 40i, 40l are deposited and the container 10 is closed by the cover 14 and the side element 16.

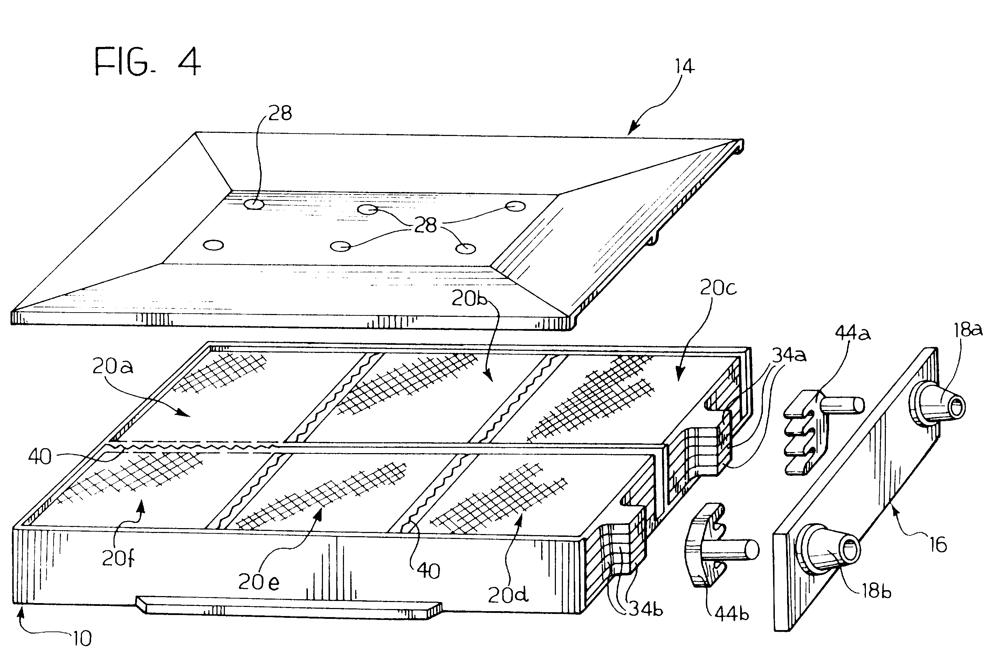

Figure 4 illustrates a further embodiment of a battery according to the invention in which corresponding or equivalent parts to those used above are indicated by the same reference numerals.

In this embodiment, a plurality of elementary units each constituted by six cells 20 arranged in a matrix similar to that described above are superposed in a pack within the container 10.

Respective connecting elements 44a, 44b interconnect the terminals 34a, 34b of the same polarity and connect them to a respective pole 18a, 18b projecting from the container 10.

The various elementary units are thus connected electrically in parallel, resulting in an increase in the capacity of the battery proportional to the number of elementary units connected together.

## Claims

1. An electrical battery comprising a container which contains at least two cells (20) disposed electrically in series and each including the two electrodes, a positive one (22) and a negative one (24), separated by a partition (26), each electrode (22, 24) being constituted by at least one grid of electrically conductive material adapted to support a positive or negative active paste, and
at least one negative electrode (24) and one positive electrode (22) of two different cells (20) being formed with the use of the same grid (36), different portions (38a, 38b) of which support the positive active paste and the negative active paste,
the battery being characterized in that the two portions (38a, 38b) of each grid (36) are separated by beads (40) of insulating material.

2. A battery according to Claim 1, characterise in that it includes a first cell and a second cell (20) side by side, the first and second cells (20) including a first positive electrode and a first negative electrode having terminals (34) for connection to external circuits, and a grid (36) which has two separate portions (38a, 38b) which support the positive active paste and the negative active paste, the grid being superposed on the said first positive and negative electrodes so that the portion (38a) which supports the positive active paste is located opposite the first negative electrode, constituting the positive electrode of the second cell, and the portion (38b) which supports the negative active paste is located opposite the first positive electrode, constituting the negative electrode of the first cell.

3. A battery according to Claim 1, characterised in that it comprises a unit constituted by six cells (20) arranged in a matrix constituted by two rows and three columns, each including a positive electrode (22) located opposite a negative electrode (24) with the interposition of a partition (26), the electrodes (22, 24) of the six cells (20) being located in a first plane (30) and a second plane (32), the planes being parallel, so that the electrodes (22, 24) of different polarity are arranged in a chequered array in each plane.

4. A battery according to Claim 3, characterised in that, in the first plane (30), the two cells (20c, 20d) of an end column of the matrix have a first positive electrode (22c) and a first negative electrode (24d) respectively provided with terminals (34a, 34b) for connection to external circuits and the two remaining pairs (20a, 20b; 20e, 20f) of cells of each row of the matrix have respective grids (36a, 36b) , different portions (38a, 38b) of which support a positive active paste and a negative active paste, constituting further positive electrodes (22a, 22e) and negative electrodes (24b, 24f), and in that, in the second plane (32), the pair of cells (20a, 20f) of the end column opposite the end column containing the cells (20c, 20d) with the first positive electrode (22c) and negative electrode (24d) and the two remaining pairs (20b, 20c; 20e, 20d) of cells of each row of the matrix, have grids (36c, 36d, 36e), different portions (38a, 38b) of which support a positive active paste and a negative active paste constituting further positive electrodes (22b, 22d, 22f) and negative electrodes (24c, 24e, 24a).

5. A battery according to any one of Claims 3 or 4 characterised in that the container (10) has a stiffening wall (42) which projects upwardly between the two rows of cells (20) of the central column and the end column in which there are the cells (20c, 20d) which house the electrodes (22c, 24d) provided with connecting terminals (34a, 34b).

6. A battery according to any one of the preceding claims 3 to 5, characterised in that it includes a plurality of the said units disposed in a pack within the container (10) with respective connecting elements (44a, 44b) connecting the terminals (34a, 34b) of the same polarity together and to a respective pole (18a, 18b) projecting from the container (10).

## Patentansprüche

1. Elektrische Batterie, die ein Gehäuse umfaßt, in dem mindestens zwei Zellen (20) elektrisch in Serie geschaltet angeordnet sind, wovon jede zwei Elektroden, eine positive (22) und eine negative (24), aufweist, getrennt durch ein Trennelement (26), wobei jede Elektrode (22, 24) aus mindestens einem Gitter aus elektrisch leitendem Material gebildet ist, das geeignet ist, eine positiv oder negativ aktive Paste zu tragen, und wobei mindestens eine negative Elektrode (24) und eine positive Elektrode (22) zweier verschiedener Zellen (20) unter Verwendung des selben Gitters (36) ausgebildet sind, dessen verschiedene Bereiche (38a, 38b) die positiv aktive Paste und die negativ aktive Paste tragen, dadurch gekennzeichnet, daß die beiden Bereiche (38a, 38b) jedes Gitters (36) durch Ränder (40) aus isolierendem Material voneinander getrennt sind.

2. Batterie nach Anspruch 1, dadurch gekennzeichnet, daß sie Seite an Seite eine erste Zelle und eine zweite Zelle (20) umfaßt, wobei die erste und zweite Zelle (20) eine erste positive und eine erste negative Elektrode mit Anschlußstellen (34) für den Anschluß eines außenliegenden Schaltkreises umfassen, sowie ein Gitter (36), das zwei getrennte Bereiche (38a, 38b) aufweist, die die positiv aktive Paste und die negativ aktive Paste tragen, wobei das Gitter der ersten positiven bzw. negativen Elektrode so vorgelagert ist, daß der Bereich (38a), der die positiv aktive Paste trägt, gegenüber der ersten negativen Elektrode angeordnet ist und dabei die positive Elektrode der zweiten Zelle bildet und daß der Bereich (38b), der die negativ aktive Paste trägt, gegenüber der ersten positiven Elektrode angeordnet ist und dabei die negative Elektrode der ersten Zelle bildet.

3. Batterie nach Anspruch 1, dadurch gekennzeichnet, daß sie eine aus sechs Zellen (20) gebildete Einheit umfaßt, wobei diese in einer Matrix aus zwei Reihen und drei Spalten angeordnet sind und jeweils eine positive Elektrode (22) umfassen, die gegenüber einer negativen Elektrode (24) unter Zwischenlage eines Trennelementes (26) angeordnet sind, und wobei die Elektroden (22, 24) der sechs Zellen (20) in einer ersten Ebene (30) und einer zweiten Ebene (32) angeordnet sind und die Ebenen zueinander parallel sind, sodaß die Elektroden (22, 24) unterschiedlicher Polarität schachbrettartig in jeder Ebene angeordnet sind.

4. Batterie nach Anspruch 3, dadurch gekennzeichnet, daß in der ersten Ebene (30) die beiden Zellen (20c, 20d) einer Endspalte der Matrix eine erste positive Elektrode (22c) bzw. eine erste negative Elektrode (24d) aufweisen, die mit Anschlußstellen (34a, 34b) für den Anschluß außenliegender Schaltkreise versehen sind, daß die beiden verbleibenden Paare (20a, 20b; 20e, 20f) von Zellen jeder Reihe der Matrix jeweilige Gitter (36a, 36b) aufweisen, deren unterschiedliche Bereiche (38a, 38b) eine positiv aktive Paste und eine negativ aktive Paste tragen und dadurch weitere positive Elektroden (22a, 22e) und negative Elektroden (24b, 24f) ausbilden, und daß in der zweiten Ebene (32) das Paar von Zellen (20a, 20f) der Endspalte gegenüber der Endspalte, die die Zellen (20c, 20d) mit der ersten positiven Elektrode (22c) und negativen Elektrode (24d) und die beiden verbleibenden Paare (20b, 20c; 20e, 20d) von Zellen jeder Reihe der Matrix enthält, Gitter (36c, 36d, 36e) umfaßt, deren unterschiedliche Abschnitte (38a, 38b) eine positiv aktive und eine negativ aktive Paste tragen und dadurch weitere positive Elektroden (22b, 22d, 22f) und negative Elektroden (24c, 24e, 24a) ausbilden.

5. Batterie nach Anspruch 3 oder 4, dadurch gekennzeichnet, daß das Gehäuse (10) eine aussteifende Wand (42) aufweist, die zwischen den beiden Reihen von Zellen (20) der zentralen Spalte und der Endspalte, in der die Zellen (20c, 20d) liegen, die die mit Anschlußstellen (34a, 34b) versehenen Elektroden (22c, 24d) aufnehmen, nach oben ragt.

6. Batterie nach einem der Ansprüche 3 bis 5, dadurch gekennzeichnet, daß sie eine Vielzahl von Einheiten umfaßt, die im Gehäuse gestapelt mit jeweiligen Verbindungselementen (44a, 44b) angeordnet sind, welche die Anschlußstellen (34a, 34b) der selben Polarität zu einem jeweiligen Pol (18a, 18b), der von dem Gehäuse (10) absteht, miteinander verbinden.

## Revendications

1. Batterie électrique comprenant un bac qui contient au moins deux cellules (20) disposées électriquement en série et chacune comportant les deux électrodes, une électrode positive (22) et une électrode négative (24) séparées par une paroi (26), chaque électrode (22, 24) étant constituée par au moins un grillage en matériau électriquement conducteur apte à supporter une pâte active positive ou négative et, au moins une électrode négative (24) et une électrode positive (22) de deux cellules différentes (20) formées par l'utilisation du même grillage (36) dont différentes portions (38a, 38b) supportent la pâte active positive et la pâte active négative, la batterie étant caractérisée en ce que les deux portions (38a, 38b) de chaque grille (36) sont séparées par des bordures (40) de matériau isolant.

2. Batterie selon la revendication 1, caractérisée en ce qu'elle comporte une première cellule et une seconde cellule (20), côte-à-côte, la première et la deuxième cellule (20) incluant une première électrode positive et une première électrode négative ayant des bornes (34) pour la connexion à des circuits extérieurs, et un grillage (36) qui a deux portions séparées (38a, 38b) qui supporte la pâte active positive et la pâte active négative, le grillage étant superposé sur lesdites premières électrodes positives et négatives de façon que la portion (38a) qui supporte la pâte active positive soit placée à l'opposé de la première électrode négative, constituant l'électrode positive de la seconde cellule, et la portion (38b) supportant la pâte active négative soit placée opposée à la première électrode positive constituant l'électrode négative de la première cellule.

3. Batterie selon la revendication 1, caractérisée en ce qu'elle comprend une unité constituée de six cellules (20) disposées en matrice constituée de deux rangées et trois colonnes, chacune comprenant une électrode positive (22) située à l'opposé d'une électrode négative (24) avec interposition d'une paroi (26), les électrodes (22, 24) des six cellules(20) étant situées dans un premier plan (30) et un second plan (32), les plans étant parallèles, de façon que les électrodes (22, 24) de différente polarité soient disposées en damier dans chaque plan.

4. Batterie selon la revendication 3, caractérisée en ce que, dans le premier plan (30), les deux cellules (20c, 20d) de la dernière colonne de la matrice ont une première électrode positive (22c) et une première électrode négative (24d) pourvues de bornes respectivement (34a, 34b) pour la connexion à des circuits extérieurs et les deux paires de cellules restantes (20a, 20b; 20e, 20f) de chaque rangée de la matrice ont des grillages respectifs (36a, 36b), dont différentes portions (38a, 38b) supportent une pâte active positive et un pâte active négative, constituant des électrodes positives supplémentaires (22a, 22e) et des électrodes négatives supplémentaires (24b, 24f), et en ce que, dans le second plan (32), la paire de cellules (20a,20f) de la dernière colonne, opposée à la dernière colonne contenant les cellules (20c, 20d) avec la première électrode positive (22c) et l'électrode négative (24d) et les deux paires de cellules restantes (20b, 20c; 20e, 20d) de chaque rangée de la matrice, ont des grilles (36c, 36d, 36e), dont différentes portions (38a, 38b) supportent une pâte active positive et une pâte active négative constituant des électrodes positives supplémentaires (22b, 22d, 22f) et des électrodes négatives supplémentaires (24c, 24e, 24a).

5. Batterie selon l'une quelconque des revendications 3 ou 4 caractérisée en ce que le bac (10) comprend un mur rigidifiant (42) s'élevant entre les deux rangées de cellules (20) de la colonne centrale et de la dernière colonne dans laquelle se trouvent les cellules (20c, 20d) qui logent les électrodes (22c, 22d) pourvues de bornes de connexion (34a, 34b).

6. Batterie selon l'une quelconque des revendications 3 à 5, caractérisée en ce qu'elle comprend une pluralité desdites unités empilées à l'intérieur du bac (10) avec des éléments de connexion respectifs (44a, 44b) connectant ensemble les bornes (34a,34b) de même polarité et à un pôle respectif (18a, 18b) faisant saillie hors du bac (10).
